# EUROPEAN PATENT APPLICATION

(11) **EP 1 361 725 A2**
(43) Date of publication of application: **12.11.2003**
(21) Application number: 03252411.8
(22) Date of filing: 15.04.2003
(51) Int. Cl.: H04L 29/06, H04L 12/18, H04L 12/58

(54) **System and method for facilitating interactive presentations using wireless messaging**

(30) Priority: 08.05.2002 US 142196
(71) Applicant: Nokia Corporation, 02150 Espoo (FI)
(72) Inventor: Zilliacus, Martin, 02700 Kauniainen (FI)
(74) Representative: Read, Matthew Charles

(57) **Abstract**

A system and method for facilitating interactive presentations using messaging technologies to import solicited information into the presentation or demonstration from mobile terminals of the presentation participants. A request to respond to a presentation query is presented to presentation recipients. An address is provided to the presentation recipients, where the address identifies where the presentation recipients may submit a message response via a network message service operable on the presentation recipients' mobile communication devices. The message responses submitted by the presentation recipients and received via the network message service are collected, and the vote results obtained from the presentation recipients' message responses are introduced as input parameters to the interactive presentation. The vote results can then be presented as an integral part of the interactive presentation.

## Description

The present invention relates generally to network communications systems, and more particularly to a system and method for facilitating interactive presentations using messaging technologies to import solicited information into the presentation or demonstration from mobile terminals of the presentation participants.

Technological advances in computing and communications systems, coupled with the global proliferation of computers, has changed the manner in which presentations or demonstrations are performed today. In years past, presentations were performed to a local audience, often using physical exhibits or slide shows. Today, presentations are often created on computers using presentation software, and are displayed via monitors or projected onto projection screens. Video conferencing and networking tools have also evolved, allowing presentations to be viewed by participants who are physically remote from the live presentation.

It is not uncommon for the presenter to survey the audience during a presentation. Traditionally, this was accomplished by having the presenter verbally or textually present a question, and the audience would respond by voice or by raising their hands. One technological advancement includes the distribution of special voting equipment to each of the audience members, and when a question is asked, the audience enters responses via dedicated voting devices. It is inconvenient, however, to distribute such devices to a large audience, and to (hopefully) collect all devices that were distributed. Further, such technology only works where the participants are assembled in a common area. Where the presentation is made available to remote presentation participants, they are unable to obtain one of the voting devices due to their remote location as well as the technological inability of these devices to operate over distances much beyond the standard presentation auditorium. Another audience polling methodology involves polling viewers during a television broadcast, however the responses that can be obtained are quite limited, and only textual indicia representative of an answer can be provided. No other media types such as images, sound, etc. can be provided.

Further, it is often desirable to conduct certain demonstrations for an audience, where voting or other specific "answers" are not required. For example, when new technologies are being developed, it is desirable to demonstrate such technologies to determine their potential market value or whether the technologies should be modified to the liking of a representative portion of the public.

It would therefore be desirable to provide a manner of facilitating interactive presentations, without the need for special, dedicated voting equipment. It would also be desirable to test new technologies while increasing consumer enthusiasm for technological opportunities by invoking the participation of the people watching the demonstration. The present invention provides these and other solutions, while utilizing technology already in place or being put in place for other uses. The present invention therefore solves a number of shortcomings of the prior art, and offers additional advantages over the prior art.

The present invention is directed to a system and method for facilitating interactive presentations using messaging technologies to import solicited information into the presentation or demonstration from mobile terminals of the presentation participants.

In accordance with one embodiment of the present invention, a method is provided for facilitating an interactive presentation. The method includes presenting a request to respond to a presentation query to presentation recipients, and providing an address to which the presentation recipients may submit a message response via a network message service operable on the presentation recipients' mobile communication devices. The message responses submitted by the presentation recipients and received via the network message service are collected, and the vote results obtained from the presentation recipients' message responses are introduced as input parameters to the interactive presentation. The vote results can then be presented as an integral part of the interactive presentation.

In accordance with another embodiment of the invention, a method for providing an interactive presentation system capable of performing an interactive presentation is provided. The interactive presentation that is performed includes the aforementioned process, including presenting to presentation participants a request to respond to a presentation query associated with an interactive presentation; providing an address to which the presentation participants may submit a message response via a network message service operable on the presentation participants' mobile communication devices; collecting the message responses submitted by the presentation participants and received via the network message service; introducing response results obtained from the presentation participants' message responses as input parameters to the interactive presentation; and presenting the vote results as an integral part of the interactive presentation. A cost of use for the interactive presentation system is established based on predetermined use parameters of the interactive presentation system, such as the duration and/or quantity of use of the system.

In accordance with another embodiment of the invention, a system is provided for facilitating an interactive presentation. The system includes a presentation computing system including a presentation application module to execute the interactive presentation, where queries are offered to presentation participants via the interactive presentation. The system also includes mobile communication devices operable by the presentation participants, where the mobile communication devices support a transmission of query responses via a wireless messaging technology, such as, for example, SMS, EMS, MMS, etc. A server is coupled to receive the query responses via the wireless messaging technology and to transmit the query responses to the presentation computing system via a network. The presentation computing system further includes a response processing module coupled to receive the query responses via the network, and to process the query responses and introduce the processed query responses into the interactive presentation by way of the presentation application module.

The above summary of the present invention is not intended to describe each illustrated embodiment or implementation of the present invention. This is the purpose of the figures and the associated discussion which follows.

The invention is described in connection with the embodiments illustrated in the following diagrams.
FIG. 1 is a block diagram illustrating an exemplary interactive presentation environment in accordance with the principles of the present invention;
FIG. 2 is a block diagram illustrating an exemplary embodiment of an interactive presentation environment utilizing wireless voting techniques in accordance with the present invention;
FIG. 3 is a block diagram illustrating an exemplary embodiment of an interactive computer-implemented presentation wherein audience responses are processed and integrally interposed into the presentation;
FIG. 4, which includes FIGs. 4A, 4B, and 4C, illustrates an exemplary embodiment of a vote processing application in accordance with the invention;
FIG. 5 illustrates a representative presentation screen that has incorporated the question and answer choices as created via the vote processing module;
FIG. 6 illustrates a representative presentation screen that has incorporated and presented the vote results in various unfixed, result-dependent fields of the presentation;
FIG. 7 is a flow diagram illustrating an exemplary embodiment of a method for facilitating interactive presentations or demonstrations using mobile device communications in accordance with the present invention;
FIG. 8 is a flow diagram illustrating a more particular exemplary embodiment of a method facilitating interactive presentations or demonstrations using mobile device communications in accordance with the present invention;
FIG. 9 is an exemplary embodiment of an automatic address notification feature in accordance with the invention; and
FIGs. 10 and 11 are block diagrams illustrating exemplary interactive presentation environments implementing MMS voting in accordance with the present invention.

In the following description of the various embodiments, reference is made to the accompanying drawings which form a part hereof, and in which is shown by way of illustration various embodiments in which the invention may be practiced. It is to be understood that other embodiments may be utilized, and structural and functional modifications may be made without departing from the scope of the present invention.

The present invention is directed to a system and method for facilitating interactive presentations by allowing presentation/demonstration participants to submit information or query responses via wireless terminals implementing a messaging service. Queries or other solicitations initiated via computer-generated presentations, demonstrations, or other exhibitions can be responded to by local and/or remote presentation participants using their wireless devices, such as mobile telephones, personal digital assistants (PDAs), portable computers, and the like. In accordance with the invention, the participant's responses are communicated via a messaging service, such as the Short Messaging Service (SMS). The responses or "votes" submitted by the participants via the messaging service are collected, and the actual vote is parsed from the communicated message. The collective vote results are then integrally introduced into the presentation during the normal course of the presentation, and the vote results are displayed or otherwise presented to the presentation participants. This interactive presentation system and method eliminates the need for special, presentation-specific equipment for use by the presentation participants, and also facilitates both local and remote presentation participants. The present invention supports participant responses or other submissions via, for example, text, images, graphics, photographs, video, and audio. In this manner, collective vote results can be accumulated, processed, and integrally provided as part of the presentation. Further, multimedia items such as a digital photograph taken and/or stored on the participant's wireless device can also be submitted by the participant for inclusion into the presentation or demonstration. The resulting interactive demonstrations and presentations are therefore not "fixed," but rather are adaptable in substantially real-time, at least to the point where the vote results or other submitted information can be displayed as part of the original presentation/demonstration.

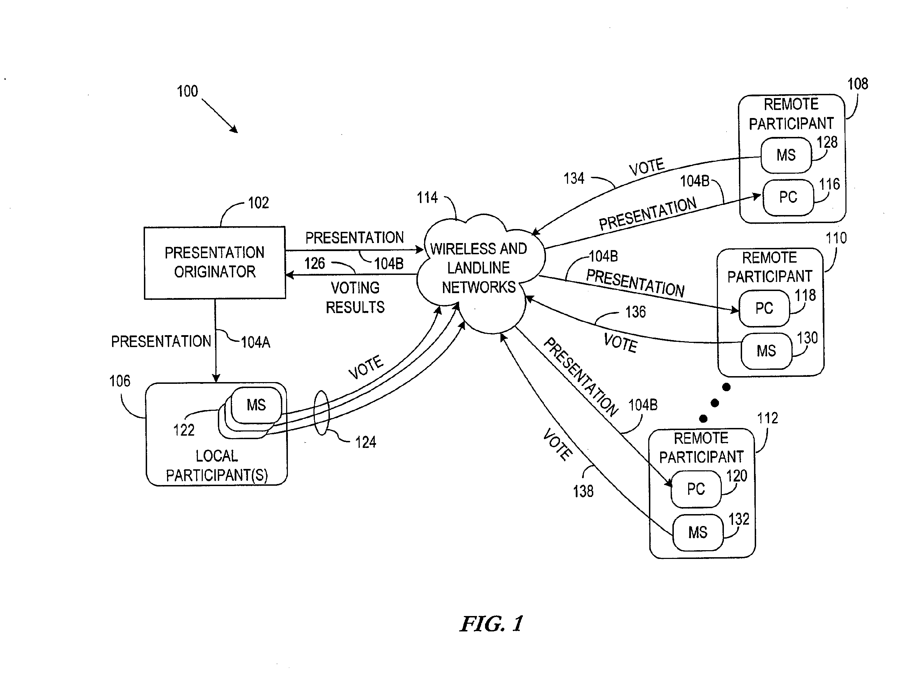

FIG. 1 is a block diagram illustrating an exemplary interactive presentation environment 100 in accordance with the principles of the present invention. In accordance with the illustrated embodiment, the presentation originator 102 represents the source of a presentation, demonstration, or other exhibition that is at least in part facilitated through the use of a computing system. For example, in one embodiment of the invention, the presentation originator 102 represents a computing system on which a presentation program can be executed, such as Microsoft® Corporation's PowerPoint® program or other commercial or proprietary presentation program. The presentation originator 102 may also include a display screen and/or projection components to provide a visual display of the presentation to local presentation participants 106, as depicted by line 104A.

The presentation originator 102 may further include a remote presentation module to provide the presentation to remote participants 108, 110, 112 as depicted by lines 104B. For example, the presentation may be provided to the remote participants via a network 114, such as the Internet. Video/audio conferencing and other program sharing and networking technologies allow the presentation 104B to be presented via one or more networks 114 to remote participants 108, 110, 112. These networks 114 may range from small local area networks (LANs) to global area networks (GANs) such as the Internet. As shown in FIG. 1, these networks 114 allow the presentation to be provided to computing systems operated by each of the remote participants. More particularly, the presentation may be viewed and/or heard by the remote participant 108 via a computing system, such as a personal computer (PC) 116. Similarly, additional remote participants 110, 112 can receive the presentation via computers 118, 120 respectively.

In accordance with one embodiment of the invention, the presentation or demonstration is "interactive" in the sense that input provided by the local and/or remote participants during the presentation can be used in the presentation itself. More particularly, input provided by the participants can be used to modify presentation text, images, charts, etc. in real-time or substantially real-time. Such an interactive presentation or demonstration can be very effective, as the particular result - which becomes an integral part of the presentation - is dependent on the collective input of one, some, or all of the presentation audience.

The present invention utilizes an efficient, versatile mechanism having a potentially global reach to allow local and/or remote presentation participants to provide solicited input to the presentation. In one embodiment, at least some of the local and/or remote participants have a mobile device or "mobile station" (MS) that can effect wireless communication via the networks 114. These mobile stations are used by the local and/or remote presentation audience to respond to queries solicited by the presentation originator 102. For example, one or more of the local participants 106 use their respective mobile stations 122 to vote or otherwise respond to questions posed as part of the presentation. The "votes" from local participants 106 are sent by wireless transmission back to the presentation originator 102, as depicted by vote lines 124 and vote result line 126. Similarly, where one or more remote participants are recipients of the presentation, each remote participant 108, 110, 112 can similarly use his/her respective mobile station 128, 130, 132 to respond with their votes as depicted by vote lines 134, 136, 138 respectively. More particular embodiments describing the manner in which the local and/or remote participants cast their votes are set forth below.

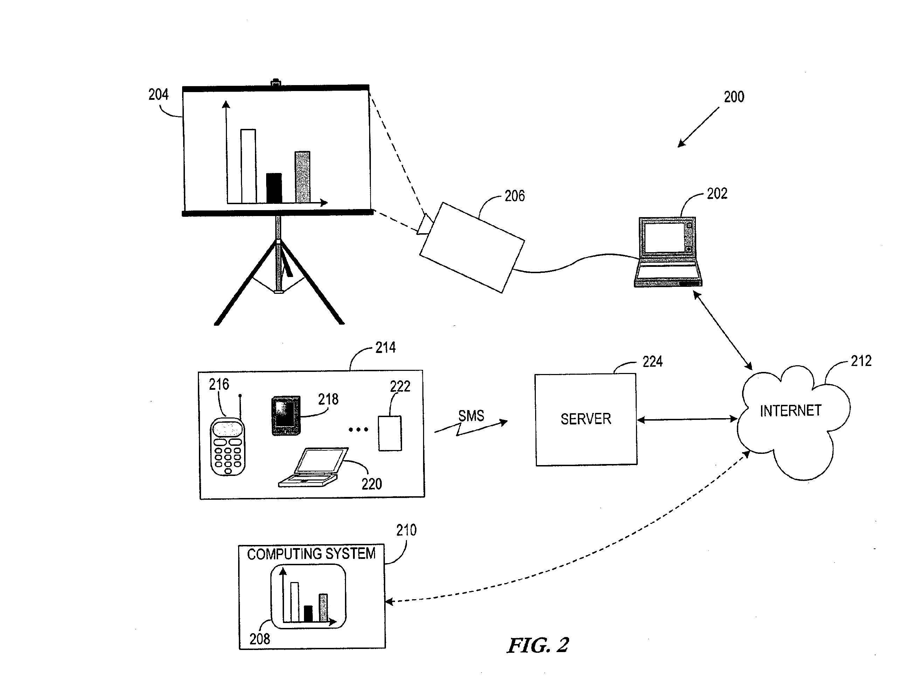

FIG. 2 is a block diagram illustrating an exemplary embodiment of an interactive presentation environment 200 utilizing wireless voting techniques in accordance with the present invention. A presentation/demonstration is performed via a computing system 202, such as a personal computer, laptop computer, workstation, etc. In one embodiment of the invention, the presentation may be presented on a screen 204 or other presentation area using a projector 206 coupled to the computing system 202. The screen 204 is merely representative of any display screen, as the presentation may be presented on a computer display, or projected/displayed in any known manner. The presentation may also be presented to a user interface 208 on one or more remote participants' computing systems 210 via a network such as the Internet 212.

The presentation includes at least one solicitation for user input. For example, the presentation may present an audio and/or visual query in which the participants are asked to submit a substantially real-time response. In accordance with the invention, the participant responds to the query via a wireless device 214. For purposes of illustration, the wireless device 214 may represent any of a number of mobile communication devices, such as a cellular telephone 216, a personal digital assistant (PDA) 218, a notebook or laptop computer 220, or any other type of terminal represented by device 222. In accordance with the invention, the participant enters a response to the presentation query via the wireless device 214, which in turn is sent via wireless transmission to a server 224 that recognizes the wireless transmission.

In an exemplary embodiment of the invention, the participant's response is communicated from the wireless device 214 using a messaging protocol such as the Short Messaging Service (SMS). SMS is a "store and forward" service, such that short messages are not sent directly from sender to recipient, but rather are sent via an SMS Center (SMSC). In one embodiment of the invention, the SMSC is represented in FIG. 2 by the server 224. In another embodiment of the invention, the server 224 functions as a back-end server coupled to one or more SMSCs located throughout the network (e.g., Internet). Other embodiments include the use of wireless card phones, such as the commercially available Nokia Card Phone. In such embodiments, either back-end or local servers are equipped with such a card phone(s), and the presentation application (e.g., hosted on computing system 202) obtains the information from the back-end/local server. From the operator point of view, a server operating in such a fashion will appear as any other phone on that network (e.g., GSM network).

Each mobile network that supports SMS has one or more messaging centers to handle and manage the short messages. An advantage of using SMS is that these messages are "always connected" and travel over and above the radio channel using the signaling path. As such, users of SMS generally do not get a busy or engaged signal as can occur using circuit-switched technologies. Other messaging services utilizing the signaling path may also be employed, such as Enhanced Messaging Service (EMS). EMS is an enhancement to SMS and supports the transmission of ringtones, operator logos and other simple visual messages to EMS capable handsets, as well as allows sending and receiving a combination of simple media such as melodies, pictures, sounds, animations, modified text, and standard text as an integrated message for display on an EMS compliant handset. Still other services can be used, including but not limited to Multimedia Messaging Service (MMS) which utilizes the data traffic channel, and General Packet Radio Service (GPRS).

For purposes of the example of FIG. 2, SMS messaging is assumed. In response to a request for a participant response to a question posed during the presentation, the participant submits a response via the mobile device 214, such as a mobile telephone 216, using the Short Message Service (SMS). The message is sent to the server 224, which in this case is an SMSC. When a message is received by the SMSC, the SMSC in turn directs the message to the appropriate target device. In the illustrated embodiment, the SMSC directs the message to the computing system 202 via the Internet 212. The computing system 202 receives the responses or "votes" from the various participants who submitted a vote. A vote processing application running on the computing system 202 processes the votes, and inputs the vote results into the presentation program. The presentation program presents the results in one or more formats, such as via text, charts, diagrams, audio, etc. For example, in response to the vote results, the presentation program may display the vote results in the form of a bar chart locally on the screen 204 or remotely on the computing system 210 display 208.

In the embodiment illustrated in FIG. 2, the participant may be either local or remote. Where a local participant, the participant can view the local display 204 and send the vote via SMS messaging from the participant's mobile device 214. Where the participant is remotely located, the presentation may be displayed on the remote participant's computing system 210, and the user again votes via SMS messaging from the participant's mobile device 214. In yet another embodiment, the presentation may alternatively be presented to a remote participant via the participant's mobile device 214 using, for example, the Wireless Application Protocol (WAP), and the participant responds to presentation queries by submitting votes via SMS messaging.

The interactive presentation environment 200 also allows the presenter to store certain information regarding the presentation participants, if desired. For example, when the participants respond to questions by way of an SMS message, the server and/or presentation computing system can capture the responding participants' subscriber and/or equipment identification, such as the Mobile Station ISDN/PSTN Number (MSISDN). The MSISDN is a mobile number used by GSM/DCS networks that contains information such as the country code, national destination code, home location register (HLR) identifier, and a subscriber number. Other subscriber identifications may also be captured depending on the technology employed, such as a Mobile Identifier (MIN), Mobile Subscriber Identify Number (IMSI), etc. Regardless of the particular subscriber identifier, such subscriber identifiers may be captured, and thereafter used by the presenter or the entity to which the presenter is affiliated. For example, by collecting the MSISDNs from the various participants in a GSM environment, the presenter can in turn send an SMS (or other) message to each of the participants such as "thank you for attending and submitting responses to our questions...you can find more information at <company URL>." Another use of this collected information is to build a database of those attending the presentation. A wide variety of Customer Relationship Management (CRM) uses for collecting this information can be envisioned.

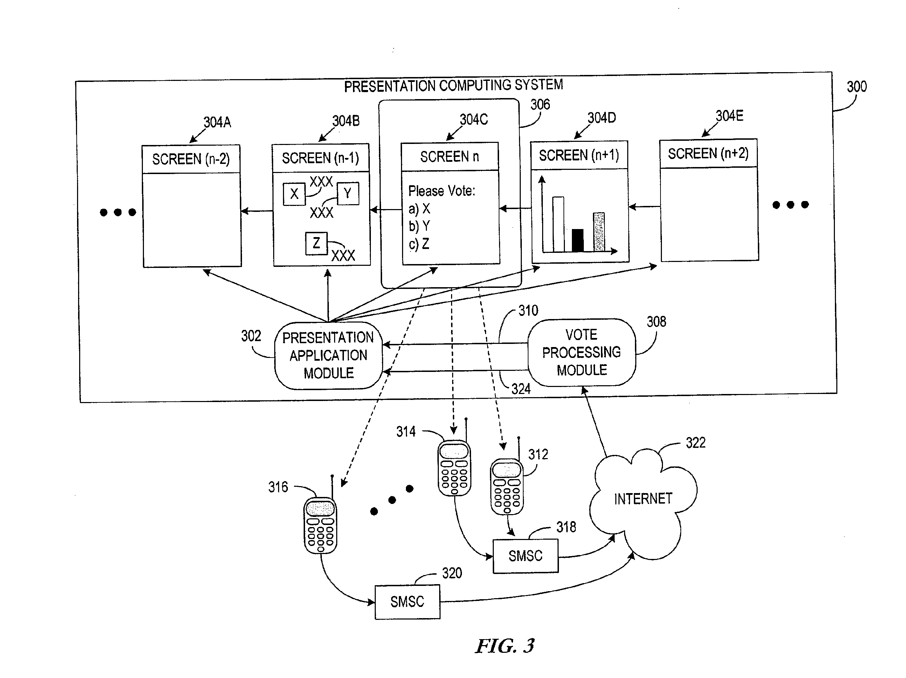

FIG. 3 is a block diagram illustrating an exemplary embodiment of an interactive computer-implemented presentation wherein audience responses are processed and integrally interposed into the presentation. A presentation computing system 300 is used, where the computing system 300 can be implemented using a desktop computer, laptop or other portable computer, workstation, mainframe computer, or any other computing system capable of executing the appropriate presentation software and/or firmware. In one embodiment, the computing system 300 includes a presentation application module 302, which includes software and/or firmware operable on the computing system 300 whether locally provided on permanent or removable storage media on the presentation computing system 300 or provided via a network-based (e.g., World-Wide-Web-based) program. For example, in one embodiment of the invention, the presentation application module 302 is a software program such as Microsoft® Corporation's PowerPoint® program and is resident on the computing system 300. The presentation application 302 generates the presentation stream or screens associated with the presentation, such as presentation screens 304A, 304B, 304C, 304D, 304E, etc. At any given point during the presentation, at least one presentation screen, such as screen 304C, is presented on a display 306 or otherwise projected onto a viewing area. As illustrated in FIG. 3, the screens are sequentially displayed in a sequence such as screen (n-2) 304A, screen (n-1) 304B, screen n 304C, screen (n+1) 304D, screen (n+2) 304E, and so forth. It should be noted that the "screens" may be "still shots" or alternatively may include moving or otherwise animated portions. It should also be noted that the presentation need not be presented in a series of "screens," but rather may be presented in a video stream (and/or audio stream) in which case the screens are not distinct images, but rather include a continuous flow of video images and/or audio segments.

In accordance with one embodiment of the invention, a vote processing module 308 is also provided. The vote processing module 308 includes software and/or firmware operable on the computing system 300 whether locally provided on permanent or removable storage media on the presentation computing system 300 or provided via a network-based (e.g., World-Wide-Web-based) program. In one embodiment of the invention, the vote processing module serves multiple purposes, including facilitating generation of queries, questions, or other audience polling prompts, as well as processing audience vote results for input to the presentation application module 302.

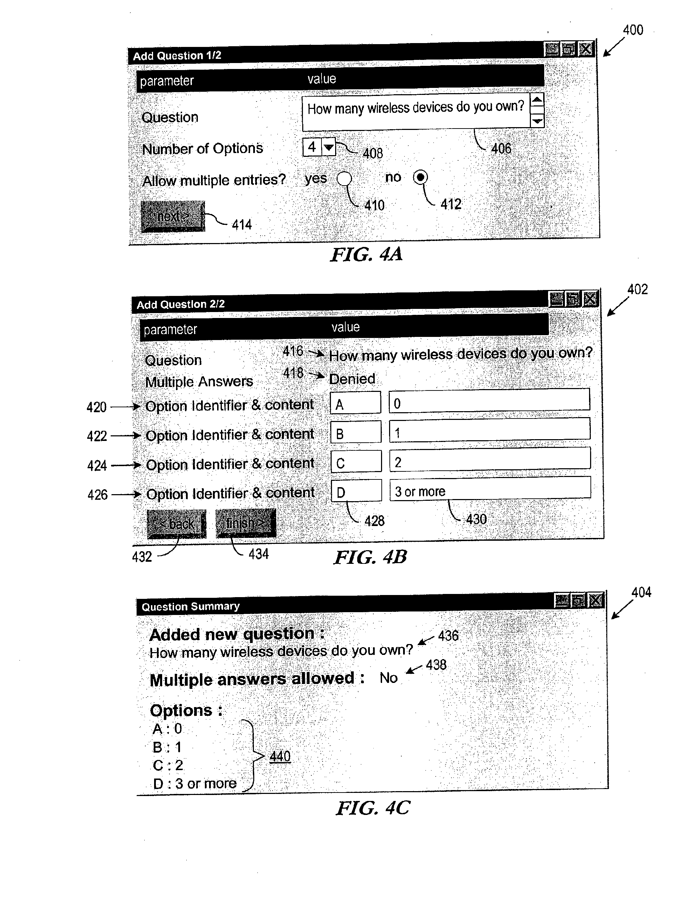

For example, in one embodiment of the invention, the vote processing module 308 is implemented using a locally-stored software application which first allows the presenter to create audience queries that are integrally included within one or more of the presentation screens. Referring now to FIG. 4, which includes FIGs. 4A, 4B, and 4C, an exemplary embodiment of a vote processing application is illustrated. In this exemplary embodiment, one or more user input screens 400, 402, 404 are presented to the presentation implementer in order to allow the creation of an audience participation question that is to be integrally included with the presentation. A first user interface 400 allows the creator of the question to identify a first portion of the question. For example, the question itself can be entered into a text box 406. Any type of question may be entered. The number of answer options to be provided can be selected via selection box 408. For example, if the question is to have four answer options, then the number "4" would be selected via selection box 408. The creator can also identify other information, such as whether multiple answers can be provided by the responding presentation participants. For example, "yes" and "no" radio buttons 410, 412 can be provided, where the selection of one of these radio buttons will either allow or prohibit the responder from selecting multiple answers to the question. Selection of the "next" button/icon 414.

User input screen 402 of FIG. 4B may be a separate window or may be integrated with one or more other windows 400, 404. This window or screen is used to include further instructive information relating to the format of the question that will be posed to the presentation audience. In the illustrated embodiment, the question and multiple answer permission is displayed, such as in text areas 416 and 418 respectively. Further, a set of fields are provided for each of the number of answer options identified in selection box 408 of FIG. 4A. For example, where "4" was selected via the selection box 408 of FIG. 4A, then four corresponding fields 420, 422, 424, 426 are presented via window/screen 402. Each field includes a first text box, such as text box 428 associated with field 426, as well as a second text box, such as text box 430 associated with field 426. In the first text box (e.g., 428) for each field, an answer option designator is entered. For example, answer option designators may be "A, B, C...," or "1, 2, 3..." or "i, ii, iii...," etc. These designators provide the indicia that the responders will ultimately use to identify their response votes. In the second text box (e.g., 430) for each field, the answer option itself is presented. These answer options will be different answer choices in which the responders will choose from. The question creator can move back a screen by selection of the "back" button 432, or may move ahead to a new screen by selecting a continue button 434. In the illustrated embodiment, only two screens 400, 402 were required to complete the question, and a "finish" button 434 serves as the continue button.

User input screen 404 may optionally be presented to the question creator after the question has been created. This screen 404 serves as a summary screen to confirm the creator's developed question. For example, the question may be displayed in text area 436, the multiple answer permission state may be displayed in text area 438, and the various answer option designators and corresponding answer options may be displayed in text area 440. It should be recognized that while text entry and text display is illustrated in FIGs. 400, 402, 404, other user interface mechanisms may alternatively be used to create the question, such as audio, graphics, etc. When the question has been created, it can then be incorporated into the presentation. It should be noted that the questions may be created in advance, or may be created during the presentation itself. For example, an audience member may ask the presenter a question, and the presenter may opt to create the question at that moment in order to poll the audience.

Returning now to FIG. 3, the question or other query is created using the vote processing module 308, and the resulting question is provided to the presentation application module 302 as depicted by line 310. It should be noted that the question may also be created using the presentation application 302 itself, however in one embodiment of the invention the question is created using the vote processing module 308. The presentation application module 302 incorporates the question into the presentation, and the question is provided as part of the presentation where the question is posed via the presentation screen 304C. As previously described, the presentation screen 304C can be displayed to local participants, and/or may be presented to remote participants via a network or other electronic transmission. In either case, the participants see (and/or hear) the question and answer choices as created via the vote processing module 308. Also associated with the presentation screen 304C is a visual and/or audio instruction to inform the participants of the message address (e.g., telephone number) in which to respond via their mobile devices. Such an address, however, may be provided to the participants in other manners, such as by verbally notifying the participants of the address, providing the address in advance of the presentation, etc.

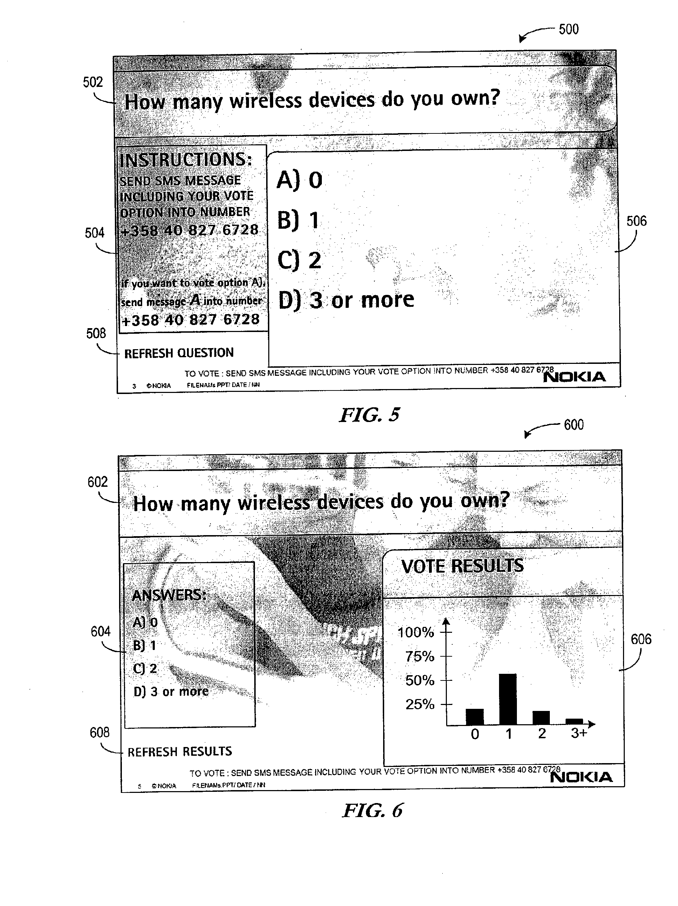

Referring briefly to FIG. 5, a representative presentation screen 500 that has incorporated the question and answer choices as created via the vote processing module 308 is illustrated. The presentation screen 500 represents an example of an actual presentation screen corresponding to the presentation screen 304C in FIG. 3, and represents what is displayed to the local and/or remote presentation audience. The presentation screen 500 provides a question display area 502 where the programmed question is presented. Also provided is a message dispatch instruction area 504, where instructional information is presented, such as the message address in which participants can respond via their mobile devices. The message address may be, for example, the MSISDN or other mobile subscriber number, an operator short number, an e-mail address, etc. An answer option area 506 presents the various answer option designators and corresponding answer options as programmed via the vote processing application. Thus, from this presentation screen, the local and/or remote presentation audience can view the question in question display area 502, decide on an appropriate answer from the choices presented in the answer option area 506, and send their answer via their mobile devices as instructed in the message dispatch instruction area 504. If a new question has been created via the vote processing application (see vote processing module 308 of FIG. 3), the presentation screen 500 can be updated to reflect the new question and answer choices by selecting the "refresh question" button or link 508. It should be recognized that the presentation screen 500 merely represents one embodiment of how the question, answer choices, instructions, etc. may be presented to the presentation audience. A variety of other known textual, graphical, audio, etc. presentation formats may also be used.

Returning again to FIG. 3, the local and/or remote presentation participants are presented with at least the question and answer choices via screen 304C. Using their mobile devices, such as mobile telephones 312, 314,...316, the local and/or remote participants send their responses (i.e., "votes") back to the vote processing module 308. In one embodiment, the presentation screen 304C includes instructions describing how the votes should be sent, an example of which was described in connection with FIG. 5. In the illustrated embodiment of FIG. 3, the message is to be sent via the Short Messaging Service (SMS), although other technologies, such as EMS, MMS, GPRS, etc. can alternatively be used in accordance with the present invention. When the participants have entered their response choice (e.g., A, B, C, etc.), the SMS message is sent to the vote processing module 308 via a Short Message Service Center (SMSC), such as SMSC 318, 320, and via a network such as the Internet 322. The vote processing module 308 collects the vote responses, and provides the vote results to the presentation application module 302 as depicted by line 324. The presentation application module 302 then introduces the received vote results into the presentation. For example, a subsequent presentation screen such as screen 304D can present the voting results in a textual, graphical, audio, etc. manner. In this manner, the same presentation that prompted the participants to respond to a question also serves to present the results, all as an integral part of the presentation.

It should be noted that while the illustrated embodiment shows the vote results being presented on a screen 304D that immediately succeeds the question on screen 304C, this need not be the case. In other embodiments, the vote results may be presented at a later time, such as near the end of the presentation, or injected when a predetermined minimum number of votes have arrived. Further, in the case of a video presentation, the results may be presented at any time subsequent to the presentation of the question.

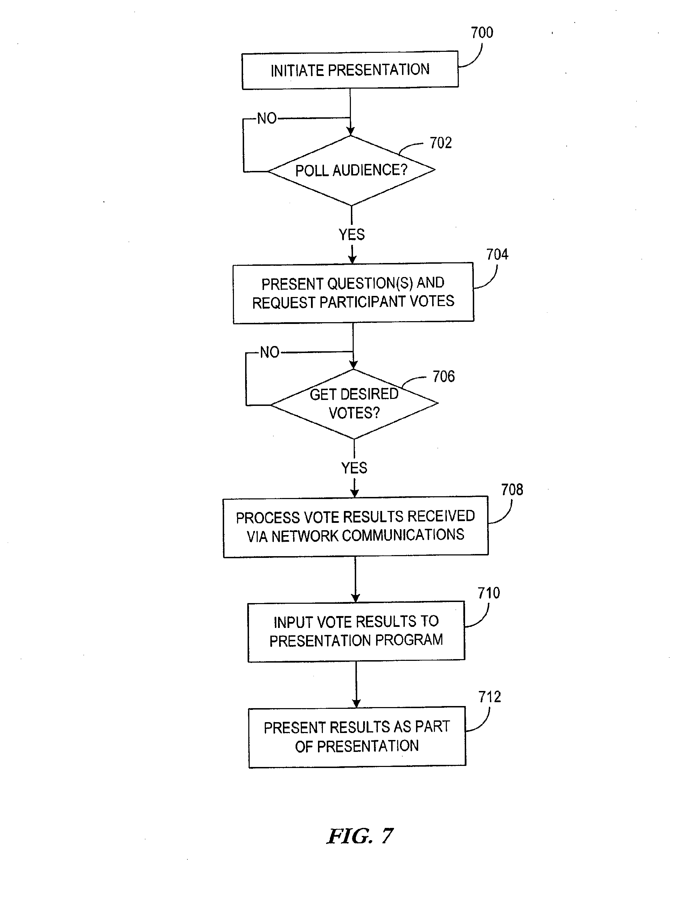

FIG. 6 is a representative presentation screen 600 that has incorporated and presented the vote results in various unfixed, result-dependent fields of the presentation. The presentation screen 600 represents an example of an actual presentation screen corresponding to the presentation screen 304D in FIG. 3, and represents what is displayed to the local and/or remote presentation audience. The presentation screen 600 provides a question display area 602 where the question is restated. Also provided is an answer option area 604 which presents the various answer option designators and corresponding answer options. A vote results area 606 presents the vote results in one or more formats, such as via text, bar charts, pie charts, etc. The vote results area 606 thus presents information that is otherwise unknown until the vote is conducted, since the vote results will vary depending on the audience responses. The vote results are driven by the presentation application and vote processing modules described in connection with FIG. 3. As shown in the representative presentation screen 600 of FIG. 6, a bar chart is provided to display the vote results. In this example, the percentage of votes corresponding to each of the four answer options is displayed. On the vertical axis, the percentage of votes is displayed. Any desired parameter may alternatively be displayed on the vertical axis, such as the actual quantity of voters selecting each answer option rather than the percentage of voters selection each answer option. On the horizontal axis of the illustrated embodiment, the various answer options (i.e., 0, 1, 2, 3 or more) are illustrated. Alternatively, the answer option designators (i.e., A, B, C, D) may be illustrated, which is particularly beneficial where the answer option is too long to conveniently display on the graph.

In one embodiment of the invention, the vote results are captured at a predetermined time, such as a predetermined number of seconds, minutes, etc. from presentation of the question. In another embodiment, the vote results may be captured by the presenter by manually selecting an icon, button, link, etc. associated with the presentation program. In another embodiment, the vote results may automatically update upon receipt of a predetermined number of vote results, such as each time a new vote result is received. In any of these or other such cases, the vote results can be updated to reflect a current state of the vote results by selecting the "refresh results" button/link 608. It should be recognized that the presentation screen 600 merely represents one embodiment of how the question, answer choices, vote results, etc. may be presented to the presentation audience. A variety of other known textual, graphical, audio, etc. presentation formats may also be implemented.

FIG. 7 is a flow diagram illustrating an exemplary embodiment of a method for facilitating interactive presentations or demonstrations using mobile device communications in accordance with the present invention. A presentation is initiated 700, such as a computer-implemented presentation based on a commercial or proprietary presentation software program. If it is desired that the local and/or remote presentation audience be polled as determined at decision block 702, then the desired question is presented and participant votes are requested as shown at block 704. The presentation participants submit their votes using mobile devices operable via a wireless network, and it is determined 706 whether the desired quantity of votes has been collected. For example, a predetermined number of collected votes may be desired prior to processing 708 the votes, or alternatively processing 708 the vote results may occur upon receipt of each vote result. The vote results received via network communications are processed 708, and input 710 into the presentation program where the results are then presented 712 as an integral part of the presentation/demonstration.

There are many purposes for requesting user input during presentations or demonstrations. For example, a marketer of a product can provide a presentation as a demo of the product, and actually obtain consumer survey information from the presentation participants as they view the presentation. More particularly, the marketer/presenter can show and/or describe multiple features of a product, and query the audience as to their favorable or unfavorable reactions to each of the features. This type of response provides the marketer with comparative results of the desirability of each of the relative features. As another example, many presentations conclude with a request for participants to complete a rating form, where the rating form provides feedback to the presenter as to the success of the presentation, presenter, or other presentation characteristics. Utilizing the present invention, such ratings can occur as an integral part of the presentation. A multitude of other possibilities also exist, and the use of the audiences' personal mobile devices as the voting tool provides for low cost, flexibility, and convenience.

Yet another manner in which a presenter can utilize the present invention is through a "free text" format. In such an embodiment, the presenter may enter a question to be presented via the presentation, such as was described in connection with FIGs. 4A, 4B, 4C, or the presenter may verbally or otherwise pose a question not presented via a presentation screen. In any case, the question posed may not include multiple answer options, but rather may be an open-ended question. For example, the presenter may present a question without providing answer options, and in response the presentation participants transmit whatever their respective responses may be. An example is an open-ended question such as "in what year was the first wireless telephone created?" Each of the presentation participants enter and transmit whatever they believe the answer to be, and when the first correct answer is recognized at the presentation computing system, the person providing the first correct answer can be identified. The winner and corresponding winning answer can then optionally be displayed as a "vote result" via the presentation. A multitude of other types of "free text" responses by presentation participants can also be used in connection with the present invention.

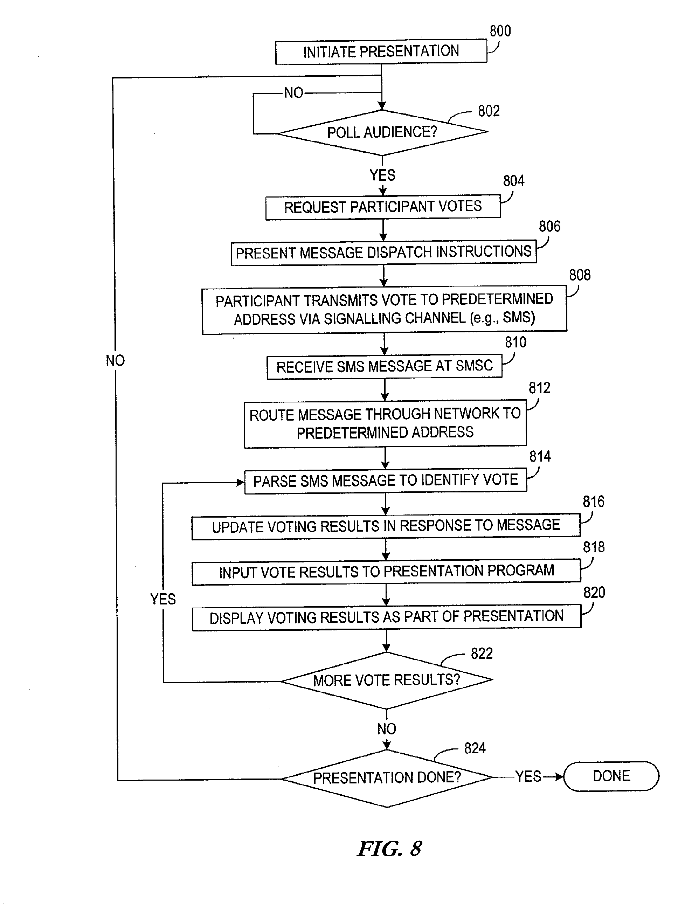

FIG. 8 is a flow diagram illustrating another exemplary embodiment of a method facilitating interactive presentations or demonstrations using mobile device communications in accordance with the present invention. A presentation, demonstration, or other electronic exhibition is initiated 800. If it is desired that the local and/or remote presentation audience be polled as determined at decision block 802, then the desired question is presented and participant votes are requested as shown at block 804. Instructions regarding the participants' manner of submitting their votes is presented 806.

In the illustrated embodiment as seen at block 808, the participants transmit their votes to a predetermined address by way of a wireless signaling channel such as SMS. The predetermined address corresponds to that provided by way of instructions as shown at block 806, and may include the MSISDN or other mobile subscriber number, an operator short number, an e-mail address, etc. The SMS message is received 810 at an SMSC, and is routed 812 through one or more networks (e.g., the Internet, LAN, etc.) to the address. The SMS message is parsed 814 or otherwise examined to identify the actual "vote" of each participant. The voting results are updated 816 in response to the received vote, and the vote results are input 818 to the presentation program. In an alternative embodiment, a predetermined number of votes may be collected before the vote results are input 818 to the presentation program. The voting results are displayed 820 as an integral part of the presentation. If more vote results are present as determined at decision block 822, these one or more additional SMS messages are parsed 814, and the vote results are updated 816, input 818 to the presentation program, and displayed 820. When no more SMS message and corresponding vote results are available or being considered, and if the presentation is completed as determined at decision block 824, the presentation ends. Otherwise, the presentation can continue, and the audience can again be polled 802 in connection with the presentation if desired.

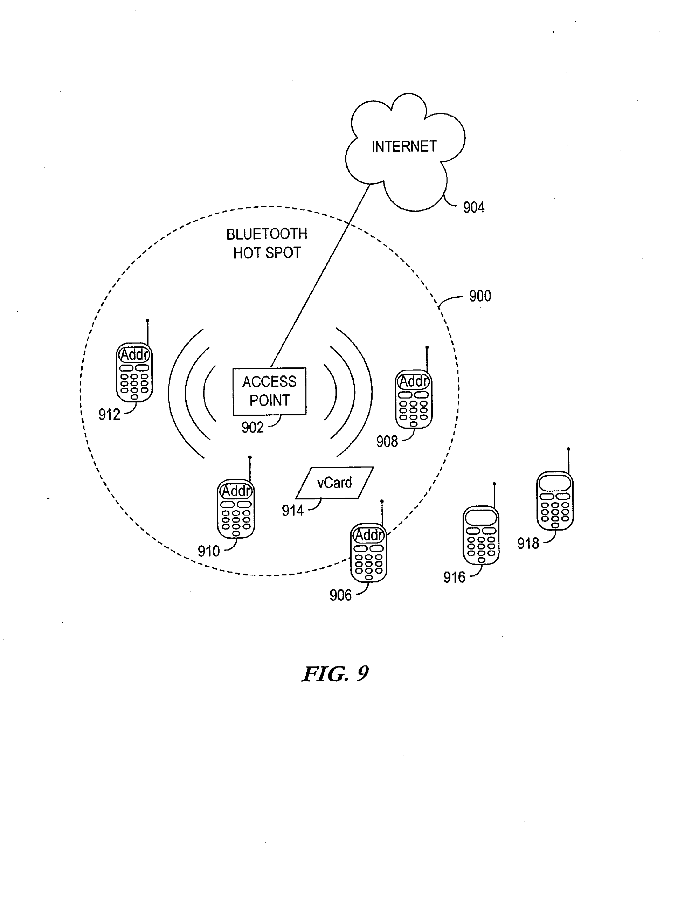

As previously indicated, one embodiment of the invention involves presenting the participants with instructions as to the manner in which they should submit responses or other messages. FIG. 5 illustrates one exemplary embodiment where instructional information is presented in the message dispatch instruction area 504 of a presentation screen, where the instructional information includes the message address (e.g., phone number) in which participants can respond via their mobile devices. These and other manners of notifying the participants of the target address may be used in accordance with the invention. However, other "automatic" notification techniques may also be used in accordance with the invention. FIG. 9 is an exemplary embodiment of one such automatic address notification feature in accordance with the invention.

The embodiment illustrated in FIG. 9 shows how localized wireless transmissions can be used to facilitate participants' receipt and utilization of an address in which responses can be targeted. FIG. 9 illustrates a Bluetooth "hot spot" 900. Bluetooth is a computing and telecommunications industry specification that describes how mobile phones and other mobile terminals can interconnect with each other and with home and business phones/computers using a short-range wireless connection. A "hot spot" is a location that has a readily accessible wireless network available to multiple people within the hot spot range. The Bluetooth hot spot 900 is thus a location such that when a device equipped with Bluetooth circuitry is within range of a Bluetooth access point 902, the user can connect wirelessly to the access point 902 to gain connectivity to a local network and/or the Internet 904. As used in connection with the present invention, this embodiment allows information to be provided to presentation participants upon entering the presentation area, assuming the participants are within the range of the access point 902. As a more specific example, participants entering the presentation area can receive data identifying the telephone number or other address in which to submit responses to presentation questions. This data may be provided, for example, in a predetermined format such as a vCard format. As is known in the communications industry, vCard is a specification for electronic business cards that can be used to exchange personal information across multiple networks and applications. This electronic card can be sent via e-mail, Internet links, or via messaging technologies (e.g., SMS, EMS, MMS, etc.). The data associated with a vCard includes information such as a person's name, address, telephone number, email address, and so on. Thus, participants' mobile devices 906, 908, 910, 912 entering or within the presentation area corresponding to the Bluetooth hot spot 900 can automatically receive a vCard 914 which will provide the address to which participant responses are to be submitted. Mobile devices 916, 918 that are outside the hot spot 900 range will not receive the vCard 914 until entering the presentation area and within the range of the access point 902. The mobile devices may have, for example, wireless LAN (WLAN) or Radio Frequency Identification (RFID) connectivity, or other connectivity technology to communicate with hot spot(s) 900 which may be constructed, for example, using WLAN, RFID, or other appropriate wireless technology.

Further, the use of a short-range wireless technology (e.g., Bluetooth) to automatically provide the query response address is not limited to a local presentation audience. In one embodiment, presentation participants remotely located from the actual presentation may also obtain addressing information in this manner. For example, a public or private kiosk or other hot spot may be accessed by remote presentation participants to obtain the requisite address in advance of the presentation that is remotely provided to these participants. As a more particular example, a conference center or company division remote from the actual presentation can accommodate remote participants, and can make available a Bluetooth kiosk which automatically provides the remote participants with the requisite address information in which to respond to questions/polls presented during the remotely-provided presentation. Other public hot spots located at, for example, an airport, hotel, etc. could also provide such information. It should be recognized that while the illustrated embodiment of FIG. 9 is described in terms of Bluetooth and vCard technology, any analogous short-range radio technologies and/or address data formats are equally applicable in accordance with the principles of the present invention.

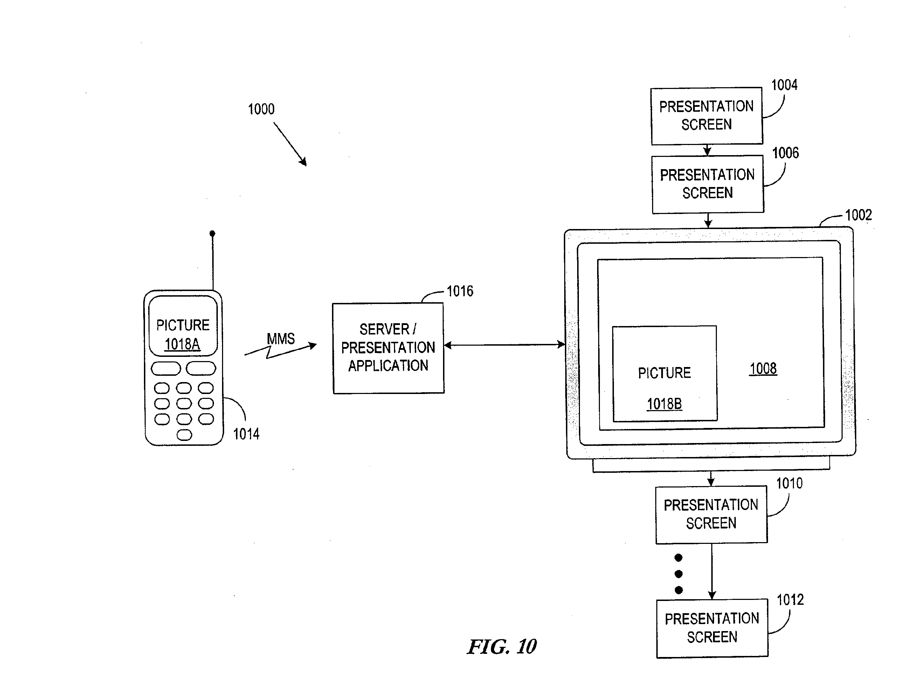

Technologies other than SMS can also be used in connection with the present invention. For example, FIG. 10 illustrates an example where Multimedia Messaging Service (MMS) messaging is used, which makes multimedia transmissions as well as text messages from the users' mobile devices possible. Where MMS or another multimedia messaging service is used, the presentation/demonstration participants can upload information such as text, digital photographs, audio, etc. into the presentation in response to a presentation request to do so. For example, for a presentation that is teaching the advantages and uses of MMS itself, participants could send a digital picture via MMS messaging, and such a picture can be displayed as part of the MMS demonstration. For future technologies, other messaging services will support video transmission as well, and presentation/demonstration participants can upload video to the presentation.

FIG. 10 is a block diagram illustrating an exemplary interactive presentation environment 1000 implementing MMS voting in accordance with the present invention. In the embodiment of FIG. 10, a presentation or demonstration is presented on a display 1002, such as a monitor, television, etc. The presentation includes a stream or series of presentation screens, some of which are illustrated as screens 1004, 1006, 1008, 1010,... 1012. Screen 1008 is currently being presented via the monitor 1002. A previous presentation screen displayed on the monitor 1002 can present a question to be answered, in the manner previously discussed. However, in the embodiment of FIG. 10, one or more presentation attendees use their mobile devices, such as mobile telephone 1014, to vote via MMS messaging. MMS allows pictures and other items to be communicated to the server/presentation application 1016. For example, in response to the presentation question, a participant may take a digital photograph or retrieve an image stored on the mobile phone 1014, and transmit the photograph or image to the server/presentation application 1016 via MMS messaging. The mobile phone 1014 must be MMS-compliant in order to accomplish this task, such as the Nokia 7650 MMS-compliant mobile unit which also includes an integrated digital camera. In response to the question, the participant can provide the picture/image 1018A resident on the mobile phone 1014 to the server/presentation application 1016, where it is then introduced into the presentation stream as depicted by the picture/image 1018B that forms part of the presentation screen 1008. Using MMS, textual information can also or alternatively be provided, as previously described in connection with the SMS embodiment. The embodiment of FIG. 8 is, for example, useful where the monitor 1002 is directly coupled to the server/presentation application 1016.

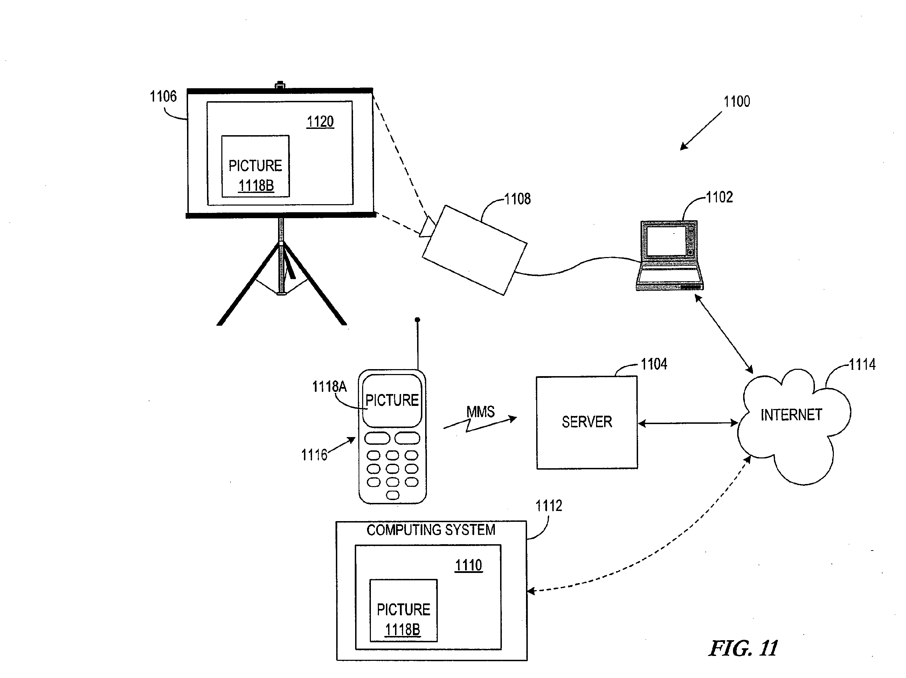

FIG. 11 is a block diagram illustrating another exemplary interactive presentation environment 1100 implementing MMS voting in accordance with the present invention. This embodiment is similar to the embodiment described in connection with FIG. 10, however the presentation program is operated on a computing system 1102 distinct from the server 1104. In this embodiment, a presentation/demonstration is performed via a computing system 1102, such as a personal computer, laptop computer, workstation, etc. In one embodiment of the invention, the presentation may be presented on a screen 1106 or other presentation area using a projector 1108 coupled to the computing system 1102. The screen 1106 represents any display screen, as the presentation may be presented on a computer display, or projected/displayed in any known manner. The presentation may also be presented to a user interface 1110 on one or more remote participants' computing systems 1112 via a network such as the Internet 1114.

The presentation includes at least one solicitation for user input. In accordance with the invention, the participant responds to the query via a wireless device, such as the mobile telephone 1116. In accordance with the invention, the participant enters a response to the presentation query via the mobile telephone 1116, which in turn is sent via MMS to a server 1104 that recognizes MMS transmission. It should be noted that in one embodiments, the participant may also submit information via MMS without a prior, express "query" that provides a list of answer choices. In other words, the information submitted by the participant via MMS need not be a specific text, graphic, audio item, but rather may be any submission.

In the illustrated embodiment, the participant's response is communicated from the mobile terminal 1116 using MMS messaging. MMS supports transmission of at least text, images, and audio. In response to a request for a participant response to a question posed during the presentation, the participant submits a response via the mobile terminal 1116 using the MMS. The message is sent to the server 1104, which in this case may be a Multimedia Messaging Service Center (MMSC), or a server in turn coupled to an MMSC. When a message is received by the MMSC, the MMSC in turn directs the message to the appropriate target device. In the illustrated embodiment, the MMSC directs the message to the computing system 1102 via the Internet 1114. The computing system 1102 receives the responses from the various participants who submitted information in response to the solicitation. A processing application running on the computing system 1102 manages the display or other presentation of the MMS message content into the presentation or demonstration. The presentation program presents the results.

For example, in response to a request for a participant to submit a digital image or photograph stored on the participant's mobile device 1116, the participant may retrieve the image or photograph on the mobile device 1116 as indicated by the "picture" 1118A. The image is transmitted via MMS to the computing system 1102 via the server 1104 and Internet 1114. The image or picture 1118B is then included in the demonstration or presentation, such as via presentation screen 1120. This type of arrangement may be particularly useful for MMS demonstrations or MMS-compliant mobile device demonstrations, where an audience of the demonstration can see how the MMS-compliant mobile device can capture images. As a more particular example, a demonstration may include taking a digital photograph with a wireless device such as the Nokia 7650 device, and the digital photograph can be presented on a screen to illustrate to an audience the digital photograph that was just taken. In such an example, the MMS messaging is the vehicle by which the digital photograph is presented on the screen 1106.

It should also be recognized that the embodiments described in connection with FIGs. 10 and 11 may also support video and sound rather than a fixed image. For example, during a presentation or demonstration, a mobile device supporting audio/video capture can be used to capture an audio/video event, such as having a recipient of the presentation or a presentation facilitator turn the mobile device on himself/herself, and record video and/or audio for a specified time. This video and/or audio segment can then be uploaded to the screen/monitor (e.g., for display to a larger group. This can be implemented using a network messaging technology supporting video and/or audio messaging, such as GPRS or other future services.

The aforementioned embodiments are representative examples of the various interactive presentation principles described herein, and the invention is not limited to these illustrated embodiments. For example, various implementations for transmitting the messages via SMS, EMS, MMS, GPRS, or other messaging technology may be used. One example is to implement the server and the application on a back-end server operating on the Internet, where the server is connected to the SMSCs, and where the presentation application pulls or otherwise receives the information over the Internet. Such a model may include integrated connections to the operator(s) and an SMS price package in place. Another example is to implement the server and the application on a back-end server operating on the Internet, where the server is equipped with a data card, such as a GSM Nokia Card Phone. The presentation application then pulls or otherwise receives the information from this server. The back-end server, from the telecom operator point of view, appears like any GSM phone on the network. Still another example is to implement the server and the application locally on the presentation computing system, where the SMS messages (or other technology messages) can be received by a data card such as the Nokia Card Phone, and again the presentation computer/server software appears, from the telecom operator point of view, just like any phone on the network. These examples are representative implementations, as the invention is equally applicable to other implementations.

Various embodiments of the present invention may be purchased and used by the presenter or company to whom the presenter is affiliated. Alternatively, any person or entity may rent or lease such a system from the system owner. In such cases, various payment options may apply to generate revenue for the system owner. For example, in a preferred embodiment the revenue may be generated by renting or leasing the presentation technology on a predetermined time basis, such as a per day cost paid to the system owner by a conference hosting company or by the presenter. In another embodiment, the rental fee may be based on the number of times in which a presentation was conducted, such as a predetermined monetary amount for each presentation conducted using the system. The presentation technology may include all or a predetermined portion of the equipment and technology described herein. For example, the presentation technology may include the client system and/or associated presentation software, the server, the phone number technology and messaging costs, which may be aggregated into a per day rental cost payable to the owner of the system. Revenue sharing with telecom operators of premium or basis rate messaging may also be used.

Using the foregoing specification, the invention may be implemented as a machine, process, or article of manufacture by using standard programming and/or engineering techniques to produce programming software, firmware, hardware or any combination thereof.

Any resulting program(s), having computer-readable program code, may be embodied within one or more computer-usable media such as memory devices or transmitting devices, thereby making a computer program product or article of manufacture according to the invention. As such, the terms "article of manufacture" and "computer program product" as used herein are intended to encompass a computer program existent (permanently, temporarily, or transitorily) on any computer-usable medium such as on any memory device or in any transmitting device.

Executing program code directly from one medium, storing program code onto a medium, copying the code from one medium to another medium, transmitting the code using a transmitting device, or other equivalent acts, may involve the use of a memory or transmitting device which only embodies program code transitorily as a preliminary or final step in making, using, or selling the invention.

Memory devices include, but are not limited to, hard disk drives, diskettes, optical disks, magnetic tape, semiconductor memories such as RAM, ROM, PROMS, etc. Transmitting devices include, but are not limited to, the Internet, intranets, telephone/modem-based network communication, hard-wired/cabled communication network, cellular communication, radio wave communication, satellite communication, and other stationary or mobile network systems/communication links.

A machine embodying the invention may involve one or more processing systems including, but not limited to, CPU, memory/storage devices, communication links, communication/transmitting devices, servers, I/O devices, or any subcomponents or individual parts of one or more processing systems, including software, firmware, hardware, or any combination or subcombination thereof, which embody the invention as set forth in the claims.

From the description provided herein, those skilled in the art are readily able to combine software created as described with appropriate general purpose or special purpose computer hardware to create a computer system and/or computer subcomponents embodying the invention, and to create a computer system and/or computer subcomponents for carrying out the method of the invention.

It will, of course, be understood that various modifications and additions can be made to the various embodiments discussed hereinabove without departing from the scope or spirit of the present invention. For example, the invention may be used in connection with any type of networking environment, ranging from local area networks to proliferative global area networks such as the Internet, and including cooperative landline and mobile networks. From the foregoing description of the illustrated embodiments, those of ordinary skill in the art will readily appreciate the applicability of the invention in any comparable network environment. Accordingly, the scope of the present invention should not be limited by the particular embodiments discussed above, but should be defined only by the claims set forth below and equivalents thereof

## Claims

1. A method of facilitating an interactive presentation, comprising:
presenting a request to respond to a presentation query to presentation recipients;
providing an address to which the presentation recipients may submit a message response via a network message service operable on the presentation recipients' mobile communication devices;
collecting the message responses submitted by the presentation recipients and received via the network message service;
introducing response results obtained from the presentation recipients' message responses as input parameters to the interactive presentation; and
presenting the vote results as an integral part of the interactive presentation.

2. The method as in claim 1, wherein the network messaging service used to transmit the message encompassing the vote result is one of Short Message Service (SMS), Enhanced Message Service (EMS), Multimedia Message Service (MMS), and General Packet Radio Service (GPRS).

3. The method as in claim 1or 2, wherein the network messaging service is a message service supporting messages including one or more of text, graphics, images, video, and audio.

4. The method as in any preceding claim, wherein the network message service is a message service wherein a corresponding message encompassing the vote result is provided via a wireless signaling channel.

5. The method as in any preceding claim, wherein the network message service is a message service wherein a corresponding message encompassing the vote result is provided via a wireless data channel.

6. The method as in any preceding claim, further comprising transmitting, by at least one of the presentation recipients via a respective mobile communication device, the message response utilizing the network messaging service.

7. The method as in any preceding claim, further comprising creating the presentation query via a vote processing module that is coupled to a presentation module executing the presentation, wherein the resulting presentation query is imported to the presentation module from the vote processing module.

8. The method as in Claim 7, wherein collecting the message responses comprises collecting the message responses via the vote processing module, and further comprising parsing each of the message responses to extract the corresponding vote results.

9. The method as in claim 7 or 8, wherein introducing the vote results as input parameters to the interactive presentation comprises importing the vote results to the presentation module from the vote processing module.

10. The method as in any preceding claim, further comprising locally presenting the interactive presentation to local presentation recipients via a display available for viewing by the local presentation recipients.

11. The method as in any preceding claim, further comprising remotely presenting the interactive presentation to remote presentation recipients by transmitting the interactive presentation to computing devices of the remote participants.

12. The method as in any preceding claim, wherein presenting the response results as an integral part of the interactive presentation comprises presenting the vote results during the progression of the interactive presentation.

13. The method as in any preceding claim, wherein the presentation query is a multiple-choice presentation query, and the responses are votes to the multiple-choice presentation query.

14. The method as in one of claims 1 to 12 wherein the presentation query is an open-ended presentation query, and the responses are not limited to a provided set of answer options.

15. The method as in any preceding claim, wherein the providing of an address comprises providing at least one of a mobile telephone number, an operator short number, and an e-mail address.

16. The method as in any preceding claim, wherein providing an address comprises providing the address to the presentation recipients via the interactive presentation.

17. The method as in any one of claims 1 to 15, wherein the providing of an address comprises automatically transmitting the address to the mobile communication devices of local presentation recipients via short-range wireless transmission.

18. The method as in claim 17, wherein automatically transmitting the address via short-range wireless transmission comprises automatically transmitting the address within a vCard to the mobile communication devices of the local presentation recipients by way of a Bluetooth hot spot having a range at least partially associated with a presentation area in which the interactive presentation is conducted.

19. The method as in any preceding claim, wherein the providing of an address comprises automatically transmitting the address to the mobile communication devices of remote presentation recipients via a short-range wireless transmission hot spot accessible to the remote presentation recipients.

20. The method as in any preceding claim, wherein the presenting of a request comprises presenting the request by way of the interactive presentation.

21. The method as in any preceding claim, further comprising storing a mobile number of the mobile communication devices for each of the presentation recipients submitting a message response.

22. The method as in claim 21, further comprising transmitting a message to the stored mobile numbers of one or more of the mobile communication devices of the presentation recipients.

23. A method according to any preceding claim comprising establishing a cost of use for the interactive presentation system based on predetermined use parameters of the interactive presentation system.

24. The method as in claim 23, wherein providing an interactive presentation system comprises providing at least a presentation software application for use on a presentation computing system, and a server coupled to receive the message responses via the network message service and to provide the message responses to the presentation computing system via a network.

25. The method as in claim 23 or 24, wherein establishing a cost of use for the interactive presentation system based on predetermined use parameters comprises establishing a rental fee based on a duration of use of the interactive presentation system.

26. The method as in claim 25, wherein establishing a rental fee based on a duration of use of the interactive presentation system comprises establishing a rental fee based on a per-day cost of use.

27. The method as in claim 23 or 24, wherein establishing a cost of use for the interactive presentation system based on predetermined use parameters comprises establishing a rental fee based on a quantity of use of the interactive presentation system.

28. A system configured to perform a method as claimed in any preceding claim.

29. A system for facilitating an interactive presentation, comprising:
a presentation computing system including a presentation application module to execute the interactive presentation, wherein at least one query is offered to presentation participants via the interactive presentation;
one or more mobile communication devices respectively operable by the presentation participants, wherein the mobile communication devices support a transmission of query responses via a messaging technology;
a server wirelessly coupled to receive the query responses via the messaging technology and to transmit the query responses to the presentation computing system via a network; and
wherein the presentation computing system further comprises a response processing module coupled to receive the query responses via the network, and to process the query responses and introduce the processed query responses into the interactive presentation by way of the presentation application module.

30. The system of claim 29, wherein the vote processing module further comprises query creation means for allowing creation of the query presented via the interactive presentation.

31. The system of claim 29 or 30, wherein:
the messaging technology is Short Message Service (SMS);
the server is a back-end server operating on the Internet and coupled to at least one SMS Center (SMSC) to temporarily store the query responses; and
the presentation computing system retrieves the query responses from the Internet-coupled SMSC.

32. The system of claim 29, 30 or 31, wherein:
the server is a back-end server operating on the Internet and including a card phone; and
the presentation computing system retrieves the query responses from the card phone, whereby the back-end server appears to a network operator as a phone on the Internet.

33. The system of claim 29, 30,31 or 32, wherein:
the server is integrated with the presentation computing system and includes a card phone; and
the presentation computing system retrieves the query responses from the card phone, whereby the server appears to a network operator as a phone on the Internet.

34. The system of any one of claims 29 to 33, further comprising a short-range wireless transmission system to automatically supply the mobile communication devices with an address to which the presentation participants submit the query responses.

35. The system of any one of claims 29 to 34, further comprising one or more remote computing systems coupled via the network to the presentation computing system to remotely receive the interactive presentation.

36. The system of claim 35, further comprising a short-range wireless transmission system to automatically supply the mobile communication devices with an address to which the presentation participants submit the query responses when the remote participants are within a range supported by the short-range wireless transmission system.

37. The system of any one of claims 29 to 36, wherein the mobile communication devices comprise at least one of a mobile telephone, a personal digital assistant (PDA), and a portable computer.

38. The system of claim 37, further comprising a projector coupled to the presentation computing system to project the interactive presentation to an auxiliary screen.

39. A computer-readable medium having computer-executable instructions for performing a method as claimed in any one of claims 1 to 27.
